(19)

(11) **EP 2 610 465 B1**

(12) **EUROPEAN PATENT SPECIFICATION**

(45) Date of publication and mention of the grant of the patent:
**20.11.2019 Bulletin 2019/47**

(21) Application number: **10856378.4**

(22) Date of filing: **27.08.2010**

(51) Int Cl.:
***F02C 7/143*** *(2006.01)* ***F24S 90/00*** *(2018.01)*
***F04D 29/58*** *(2006.01)* ***F02C 1/05*** *(2006.01)*
***F02C 3/30*** *(2006.01)* ***F02C 7/08*** *(2006.01)*
***F03G 6/06*** *(2006.01)*

(86) International application number:
**PCT/JP2010/005283**

(87) International publication number:
**WO 2012/025967 (01.03.2012 Gazette 2012/09)**

(54) **SOLAR GAS TURBINE SYSTEM**

SOLARGASTURBINENSYSTEM

SYSTÈME DE TURBINE À GAZ SOLAIRE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**03.07.2013 Bulletin 2013/27**

(73) Proprietor: **Mitsubishi Hitachi Power Systems, Ltd.**
**Yokohama 220-8401 (JP)**

(72) Inventors:
- **KOYAMA, Kazuhito**
  **Tokyo 100-8220 (JP)**
- **HATAMIYA, Shigeo**
  **Tokyo 100-8220 (JP)**
- **TAKAHASHI, Fumio**
  **Tokyo 100-8220 (JP)**
- **NAGAFUCHI, Naoyuki**
  **Tokyo 100-8220 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 1 007 832** **EP-A2- 2 199 567**
**GB-A- 2 449 181** **JP-A- 2002 519 558**
**JP-A- 2008 175 149** **JP-A- 2008 190 335**
**JP-A- 2010 144 725** **US-A- 4 069 674**
**US-B1- 6 237 337** **US-B1- 6 688 108**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 2 610 465 B1**

**Description**

BACKGROUND OF THE INVENTION

1. Field of the Invention

The present invention relates to a solar assisted gas turbine system that uses solar thermal energy in a gas turbine.

2. Description of the Related Art

It is being demanded in recent years that carbon dioxide ($CO_2$), one of global warming substances, be minimized in emission level. Systems that use renewable energy to generate electric power are receiving attention in such a trend. Typical examples of renewable energy include water energy, wind energy, geothermal energy, solar (light/heat) energy, and so on. Technological development of the power-generating systems which use solar heat, in particular, is actively taking place. Solar thermal power-generating systems commonly drive steam turbines using the steam generated by collecting solar heat with heat collectors. This kind of conventional technique is described in Patent Document 1, for example.

In contrast, gas turbine systems fueled by natural gas, petroleum, or other fossil resources, are also present. It is known that under the conditions where the atmospheric temperature rises, such as in the summer, gas turbine systems suffer a decrease in power generator output, associated with a decrease in the amount of air taken into a compressor. One means for suppressing the decrease in output due to the increase in atmospheric temperature is proposed in Patent Document 2, for example. More specifically, Patent Document 2 discloses a technique relating to a gas turbine power-generating system of the humid-air turbine (HAT) cycle, one kind of regenerative cycle. In the technique according to Patent Document 2, the atomizer installed at the inlet of a compressor employs boiling under reduced pressure to atomize the high-pressure high-temperature water generated in the cycle (i.e., an aftercooler at the compressor outlet, a humidifier for humidifying compressed air, a heat exchanger for heating humidifier-humidified water, and other characteristic constituent elements of the regenerative cycle).

Prior Art Literature

Patent Documents

Patent Document 1: JP-2008-39367-A
Patent Document 2: JP-2001-214757-A

In US 6688108 B1, a combustion unit for combusting a liquid fuel is described. The combustion unit has a fuel inlet, an air inlet and a flue gas outlet which are connected to a combustion chamber for combusting the fuel, wherein the fuel inlet is connected to at least one explosion atomizing unit which is disposed and adapted such that atomized fuel fragments due to gas formation in the atomized fuel. The explosion atomizing unit is preferably an explosion swirl atomizing unit to a system for generating power having at least one gas turbine, at least one compression device driven by the gas turbine and at least one such combustion unit.

SUMMARY OF THE INVENTION

The solar thermal power-generating systems discussed above require heat collectors for focusing the solar heat that is the heat source for steam generation in the system. A variety of heat-collecting schemes exist, including a trough-type heat collector, which collects heat by focusing solar light on the heat collection tube located in front of curved-surface mirrors, and a tower-type heat collector, which focuses solar light on a tower after reflecting the light using a plurality of planar mirrors, called heliostats. Irrespective of the heat-collecting scheme adopted, however, a very large number of heat collectors (reflecting mirrors) are needed to construct a high-efficiency (high-temperature) and high-output steam turbine. This means that a spacious site is required for heat collector installation. For example, an electric power plant with an output capacity of 50 MW is said to require a heat collector installation area of 1.2 square kilometers.

Meanwhile, when solar thermal power-generating systems are viewed from the perspective of costs, since the number of heat collectors required for one system is very large, the rate of the costs relating to solar light/heat collectors currently accounts for as much as some 80% of the total cost required of the entire system. For this reason, the number of heat collectors needs to be significantly reduced for cost cuts. The reduction in the number of collectors, however, has been a bottleneck contradictory to the purpose of achieving high efficiency and high output in a solar thermal power-generating system.

An object of the present invention is to provide a solar assisted gas turbine system significantly reduced in the number of heat collectors and downsized in heat collector installation site area requirement.

In order to attain the above object, the solar assisted gas turbine system according to the present invention is constructed to supply high-pressure hot water that has been generated beforehand using solar heat, to an atomizer that forms fine liquid droplets and sprays the droplets into a flow of intake air within a gas turbine, the system also utilizing solar thermal energy to form the fine liquid droplets in the atomizer.

More specifically, the system includes a compressor for compressing air, a combustor for burning the compressor-compressed air and a fuel, a gas turbine including a turbine driven by combustion gases generated in the combustor, and a heat collector for collecting solar heat, heating pressure-boosted water with the solar heat to a temperature that is higher than a boiling point under an atmospheric pressure and is lower than a boiling point under the boosted pressure and creating high-pressure hot water; the system further including an atomizer that atomizes the collector-created high-pressure hot water and sprays the atomized hot water into a flow of air taken into the compressor.

According to the present invention is provided a solar assisted gas turbine system significantly reduced in the number of heat collectors and downsized in heat collector installation site area requirement.

## BRIEF DESCRIPTION OF THE DRAWINGS

Fig. 1 is a configuration diagram of a solar assisted gas turbine power-generating system according to a first embodiment;
Fig. 2 is an atmospheric temperature-power generator output characteristic curve of a conventional-type gas turbine power-generating system;
Fig. 3 is a sectional view of a compressor inlet;
Fig. 4 is a diagram showing a relationship between a water temperature and a saturation pressure/operating pressure (example);
Fig. 5 is a configuration diagram of a solar assisted gas turbine power-generating system according to a second embodiment;
Fig. 6 is a temperature distribution diagram of compressed air in a compressor;
Fig. 7 is a diagram showing a relationship between an air temperature and absolute humidity in a compression phase;
Fig. 8 is a diagram showing a relationship between an intake air temperature and an intake air weight flow rate;
Fig. 9 is a comparative diagram of heat cycles;
Fig. 10 is a detailed structural view of a gas turbine;
Fig. 11A and 11B are diagrams showing a relationship between a water droplet forming/spraying rate and an increase ratio of gas turbine output;
Fig. 12 is a schematic of changes in pre-spraying/post-spraying differential compressor outlet temperature;
Fig. 13 is a configuration diagram of a solar assisted gas turbine power-generating system according to a third embodiment; and
Fig. 14 is a configuration diagram of a solar assisted gas turbine power-generating system according to a fourth embodiment.

## DESCRIPTION OF THE PREFERRED EMBODIMENTS

Hereunder, a background of studies which the present inventors have conducted up to implementing the present invention will be first described. A basic concept of the invention will also be described.

In considering reduction in the number of heat collectors and in site area, the present inventors conducted overall studies upon an entire system inclusive of a solar thermal power-generating apparatus, as well as upon the solar heat collectors. A steam turbine type that uses general heat collectors as a heat source needs to generate steam of several hundred degrees C (e.g., nearly 300°C) as a heat source for generation of driving steam. If attention is focused on an evaporation process of water, causing a state change of the water into steam requires a great deal of heat in the form of evaporation latent heat (this heat is also referred to as the latent heat of vaporization or simply as the heat of vaporization). For example, the heat that 300°C steam can retain is formed from sensible heat retained at a normal temperature from 15°C to 100°C, evaporation latent heat retained at 100°C, and sensible heat retained at 100°C to 300°C in steam temperature. The heat content ratio of the three forms of heat is, for example, 1.3%:83.8%:14.9%, with the evaporation latent heat occupying more than 80% of the total heat content. The steam turbine type, for reasons associated with its principles of operation, requires steam, and takes a configuration requiring a large volume of energy as the evaporation latent heat for generating steam. Theoretically, 70 to 80 percent of all calories collected by the heat collectors in the steam turbine type is consumed as the evaporation latent heat. This is why the number of heat collectors and the site area required for installation of the heat collectors become very large.

For these reasons, in addition to effectively utilizing the thermal energy of the sun, the present inventors made the following invention as one for reducing significantly the number and installation site area of heat collectors that have been problematic in conventional types of solar thermal power-generating systems. That is, standing on the knowledge that a large amount of energy (as evaporation latent heat) is required for steam generation in the steam turbine type, the inventors conducted various studies from a perspective of combination with a technique designed to confine a function of heat collectors to creating high-pressure hot water of 150 to 200 degrees C, for example, that does not require evaporation latent heat, and make effective use of the water, not to create a system that generates steam from solar heat. As a result, the inventors arrived at a conclusion that the invention can be applied as a gas turbine system capable of utilizing high-pressure hot water whose temperature is lower than that of the water used in conventional solar thermal power-generating systems, the high-pressure hot water being useable even under a liquid phase state.

More specifically, in the present invention, high-pressure hot water that has been created using solar heat is applied as atomization water of atomizer for cooling intake air in a gas turbine, and the solar thermal energy stored as the high-pressure hot water is used to create fine liquid droplets in the atomizer. The creation of the droplets to be sprayed, in particular, is achieved by boiling the hot water under reduced pressure.

Applying the above scheme to the present invention means constructing a solar thermal system in which only a sensible heat content in solar heat, that is, the amount of heat for changing only a temperature of a substance without changing a state thereof, needs to be collected for creating high-pressure hot water. The system according to the present invention, therefore, makes it unnecessary to use the large amount of solar energy that has been an absolute requirement as evaporation latent heat in the conventional systems. This enables significant reduction in the number of heat collectors to be installed to collect energy, and in the site area required for the installation of the heat collectors.

A gas turbine system that applies solar thermal energy in the present invention is next described below. Basically constituent elements of the gas turbine system are a compressor for compressing air, a combustor for burning the above air compressed by compressor and a fuel, and a turbine driven by combustion gases generated in the combustor. A device to be driven is usually connected as a load to the gas turbine. In a case of a gas turbine power-generating system, in particular, a power generator to be driven by rotation of the turbine is to be added to the above system configuration. While the following describes a gas turbine power-generating system as a typical example of a solar thermal power-generating system, the present invention can also be applied to gas turbine systems that drive devices such as pumps and/or compressors, other than the generator.

A concept common to various embodiments that apply solar thermal energy to the above-outlined gas turbine system is discussed below. In the compressor that compresses air, high-pressure hot water is atomized and then mixed with air present at an inlet of the compressor, in order that the air temperature inside an air intake duct for drawing in the air, or at an upstream side of the air intake duct, is below an ambient air temperature. The system is constructed so that it uses solar heat to create the high-pressure hot water by heating water inside a heat collection tube of a heat collector and then supplies the hot water to an upstream section of the compressor. The spraying of room temperature water is generally known to lower the compressor inlet air temperature, but inside the compressor that is a rotary machine, rapidly vaporizing the sprayed water without forming any droplets is desirable in terms of air intake performance and machine/device reliability (rotary machine balancing). From this standpoint, the present embodiment features the atomization of hot water that seemingly contradicts the purpose of reducing the compressor inlet air temperature. That is, the system boils high-pressure hot water under reduced pressure by suddenly depressurizing the water from the high-pressure state (inside the heat collection tube and inside an atomizing nozzle) to an atmospheric-pressure state (at the compressor inlet) utilizing the fact that about 70 to 80 percent of the heat content in the high-pressure hot water is occupied by the latent heat of vaporization . In this case, room temperature water is cooled down to a temperature below the freezing point by an endothermic action of the latent heat of vaporization, and thus, easily freezes at the compressor inlet. Additionally, atomized room temperature water refuses to narrow down in particle size, which may render the water incapable of rapid vaporization in the compressor. As in the present embodiment, therefore, the water is atomized as high-pressure hot water for accelerated formation of finer particles during reduced-pressure boiling. Since solar heat is used to create the high-pressure hot water, the present embodiment is effective for suppressing an increase in $CO_2$ emissions, one cause of global warming, without using a new fossil fuel.

The following describes each embodiment of the present invention in detail below using the accompanying drawings.

First Embodiment

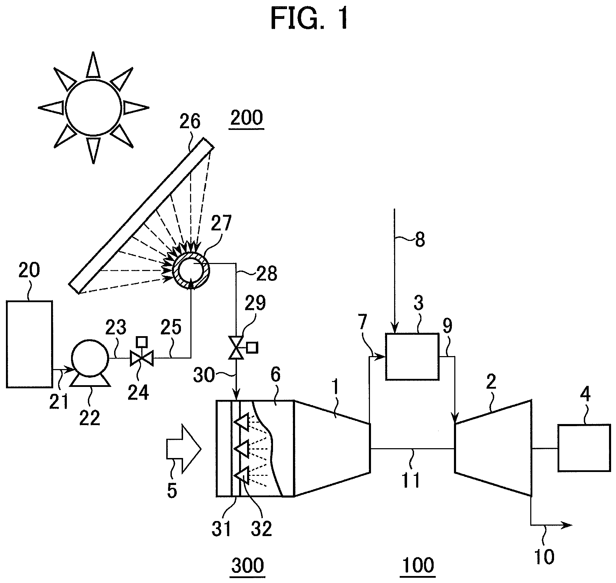

A first embodiment of the present invention is described below referring to Fig. 1. Fig. 1 shows a configuration diagram of a solar assisted gas turbine power-generating system applying an atomizer to atomize the high-pressure hot water created using solar heat.

Referring to Fig. 1, the solar assisted gas turbine power-generating system according to the present embodiment is divided into three major sections: a gas turbine apparatus 100, a heat collector 200 that focuses solar heat and creates high-pressure hot water, and an atomizer 300 that atomizes the high-pressure hot water created by the collector 200 and sprays the atomized hot water into a stream of intake air.

The gas turbine apparatus 100 has an air intake duct 6 at an upstream side of a compressor 1. The upstream side of the compressor 1 may include an air intake chamber (not shown) to draw in air. Air 5 under atmospheric conditions is guided into the compressor 1 through the air intake duct 6. Compressed air 7 that has been pressurized by the compressor 1 flows into a combustor 3. In the combustor 3, the compressed air 7 and a fuel 8 burn to cause high-temperature combustion gases 9. The combustion gases 9 flow into a turbine 2, then rotate a power generator 4 via the turbine 2 and a shaft 11, and resultingly drive the power generator to generate electricity. The combustion gases 9 that have driven the turbine 2 are discharged therefrom as combustion gas emissions 10.

The heat collector 200 consists mainly of a light-focusing plate 26 that focuses solar light, and a heat collection tube 27 that heats a desired medium using the solar light and heat focused by the heat collection plate 26. A water tank 20 for storage of water, the medium to be heated, is connected to the heat collection tube 27 via a water pump 22 used to boost a pressure of the water stored within the water tank 20, and a flow-regulating valve 24 used to regulate a flow rate of feedwater to be supplied. The water tank 20, the water pump 22, the flow-regulating valve 24, and the heat collection tube 27 are interconnected through feedwater lines 21, 23, and 25. The heat collection tube 27 is connected to the atomizer 300 to be described later in detail, via a water line 28 for supplying the hot water heated by the collection tube 27, a pressure-regulating valve 29 for regulating a pressure of the hot water to be supplied, and a water line 30 for supplying the pressure-regulated hot water.

Strictly speaking, the heat collector 200 is a combination of the focusing plate 26 and the collection tube 27. Loosely, however, the collector 200 can also be termed a heat collector including a feedwater system to the collection tube constituted by the water tank 20, the water pump 22, the flow-regulating valve 24, and the water lines 21, 23, 25 connecting the three elements, the heat collector further including a feedwater system to atomizing nozzles constituted by the pressure-regulating valve 29 and the water lines 28, 30. The heat collector 200 in the following description is termed the collector including both of its strict and loose interpretations.

The atomizer 300 includes an atomizer main tube 31 present inside the air intake duct 6 positioned at the upstream side of the compressor 1, and a plurality of atomizing nozzles 32 connected to the atomizer main tube 31. The atomizer main tube 31 is connected to the water line 30, through which high-pressure hot water is supplied from the heat collector 200. Although Fig. 1 shows an example of arranging the atomizing nozzles 32 of the atomizer 300 in the air intake duct 6,the nozzles 32 can instead be set in the air intake chamber not shown. If a silencer is disposed in the air intake chamber, the atomizing nozzles 32 are desirably positioned at a downstream side of the silencer. If a screen and/or the like is disposed in the air intake chamber, placement of the atomizing nozzles 32 at a downstream side of the screen is desirable for preventing sprayed fine liquid droplets from sticking to the screen.

In the above system configuration of the present embodiment, the water in the water tank 20 is supplied to the feedwater line 21, the water pump 22, the feedwater line 23, the flow-regulating valve 24, and the feedwater line 25, in that order, and then pumped out to the heat collection tube 27. The collection tube 27 in Fig. 1 is partly shown in sectional view. Although actual heat collection tube 27 includes a plurality of tubes at least several meters long, only one of the tubes is shown as a typical one in Fig. 1. The collection tube 27 is irradiated with the solar light that the focusing plate 26 has focused. The water, after being supplied to the collection tube 27, is heated by the solar radiation and becomes high-pressure hot water in the tube 27. The high-pressure hot water in the collection tube 27 is pumped out to the water line 28, the pressure-regulating valve 29, and the water line 30, in that order. The water line 30 has its downstream end connected to the atomizer main tube 31 in the air intake duct 6, with the atomizing nozzles 32 being provided on the atomizer main tube 31. The high-pressure hot water upon circulating through the water line 30 is sprayed from the atomizing nozzles 32 into the air intake duct 6 via the atomizer main tube 31 (the air intake duct 6 in Fig. 1 is partly shown in sectional view to represent the way the hot water is sprayed from the atomizing nozzles 32).

(Operation, action, and advantageous effects)

Next, operation of the embodiment in Fig. 1 is described below.

The present embodiment uses the water pump 22 to supply pressurized water to the inside of the heat collection tube 27, then controls the flow-regulating valve 24 and the pressure-regulating valve 29 to maintain the pressure and temperature of the water in.an appropriate range in the collection tube 27 heated by the solar light, and supplies the water to the atomizer main tube 31 in the air intake duct 6. The appropriate water pressure in the collection tube 27 is several megapascals (MPa), and the appropriate water temperature ranges between a minimum of 100°C and a maximum of about 200°C. The present embodiment envisages operation at a water pressure of 2 MPa and a water temperature of 150°C.

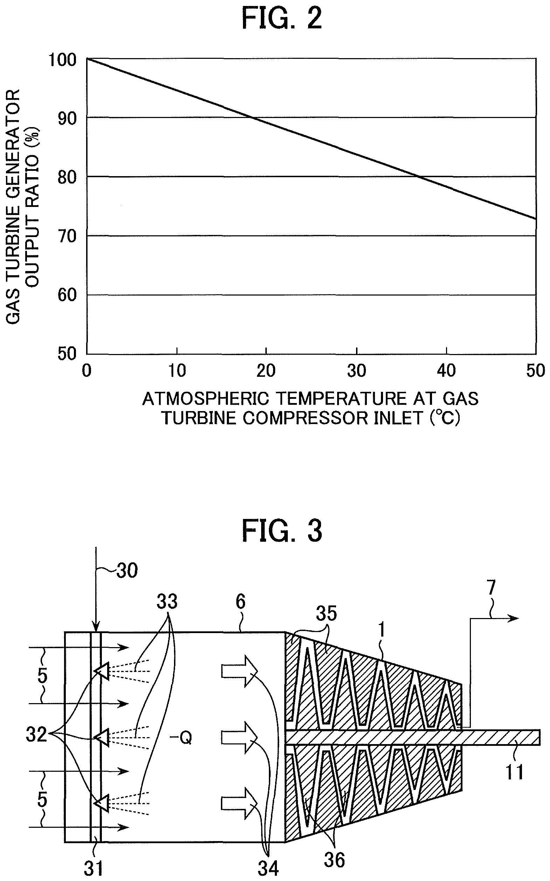

Fig. 2 is a diagram showing an atmospheric temperature - power generator output relationship, as a comparative example, in a conventional-type gas turbine power-generating system. For example, if an atmospheric temperature of 15°C at the gas turbine compressor inlet is taken as a reference, this means a decrease of approximately 10% in gas turbine generator output ratio at 35°C as an example of operation in the summer. As can be seen from this, if the compressor inlet temperature only remains the same as the atmospheric conditions, air temperature rises in the summertime will lower air density, thus reducing a flow rate of the air taken in, and correspondingly reducing an output level of the turbine and hence the generator output that can be taken out to the outside.

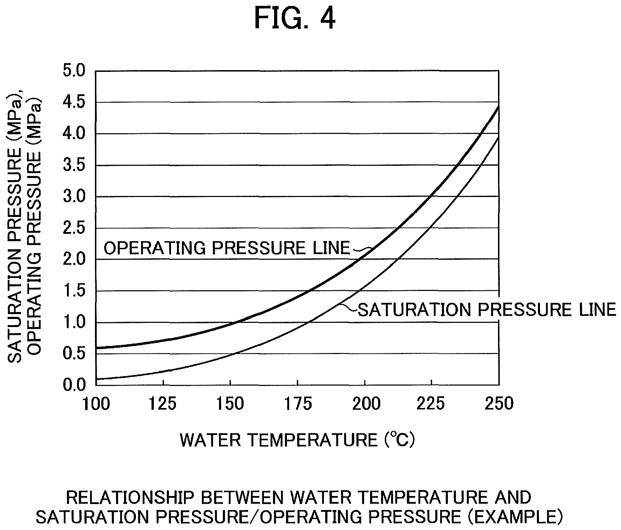

Accordingly, to suppress the decrease in generator output due to the above atmospheric temperature rise, the present embodiment features using solar thermal energy to form fine liquid droplets before spraying them, in addition to reducing the compressor inlet air temperature by using the latent heat of vaporization that deprives the hot water of its peripheral heat as it vaporizes. To be more specific, as shown in the compressor inlet sectional view of Fig. 3, the high-pressure hot water that the heat collection tube 27 has created is guided into the atomizer main tube 31 of the atomizer 300 in the air intake duct 6, and the hot water is then atomized and sprayed, inside the duct 6, from the atomizing nozzles 32 arranged in the atomizer main tube 31. For example, a flow rate of the atomized and sprayed high-pressure hot water is only 1% of that of the air 5 at the compressor inlet in terms of mass flow ratio. At this time, the high-pressure hot water of 2 MPa, 150°C at an upstream side of the atomizing nozzles 32 is reduced below the atmospheric pressure immediately after being jetted from the nozzles 32, so the hot water boils under reduced pressure in an stream of the air 5 being guided into the air intake duct 6, and part of droplets 33 vaporizes, whereby heat absorption from ambient fluids occurs ($Q<0$). A fluid mixture 34 consisting of two kinds of fluids, namely the air 5 whose temperature has been reduced to -15°C by the partial vaporization of the droplets containing the air 5 of 35°C, and unvaporized droplets, is introduced into the compressor 1. All the droplets remaining unvaporized until they have been introduced into the compressor 1 are vaporized while flowing down inside the compressor. The fluid mixture 34 flows through clearances between stationary blades 35 and moving blades 36 of the compressor 1, and are guided as the compressed air 7 into the combustor 3 after that. The atomizing nozzles 32 have their upstream pressure set to a pressure level equal to or above an operating pressure line, for example, to be the same as or higher than a saturation pressure at the water temperature, as shown in Fig. 4. The state of the high-pressure hot water is thus maintained. The heat collector 200 can also be described as one for heating pressure-boosted water to a temperature higher than a boiling point of the water under the atmospheric pressure, and lower than a boiling point of the water under the boosted pressure, and creating the high-pressure hot water to be atomized and sprayed.

Since the amount of heating needed to obtain the high-pressure hot water is equivalent to the sensible heat content in the water, the installation area required of the solar-light focusing plate 26 is, for example, as small as only about a quarter of the installation space needed to obtain the steam itself that requires the amount of heat including the latent heat of evaporation.

The atomizer 300 in the present embodiment can boost the output level of the gas turbine. This can be accounted for as follows from an output boost mechanism of the intake air atomizer:

(1) Before flowing into the compressor, intake air is cooled down and increases in density, thus increasing a weight flow rate of the air flowing into the compressor, and hence increasing the output of the turbine.
(2) As the droplets evaporate in the compressor, ambient gases are deprived of their latent heat of evaporation, with consequential compression suppressing a temperature rise of the air and leading to a decrease in compression work of the compressor.
(3) The flow rate in the turbine increases according to the amount of evaporation of the droplets and the output of the turbine correspondingly increases.
(4) Inclusion of the water vapors whose specific heat is great relative to that of air increases the specific heat of the gas mixture, resulting in a greater deal of work being performed to derive from the turbine the gas mixture that expands therein after being compressed.

(Principles of output decrease suppression by intake air atomizer cooling)

Next, the way the forming/spraying of the fine droplets suppresses a decrease in output is described in detail below.

The atomizer used in the present embodiment features: forming liquid droplets, spraying them into a flow of a gas supplied to the compressor, reducing below the atmospheric temperature a temperature of the gas which enters the compressor, introducing the sprayed droplets together with the gas into the compressor, and vaporizing the introduced droplets while they are flowing downward inside the compressor. Thus, providing simplified equipment suitable for practical use allows both output and thermal efficiency to be improved by spraying the liquid droplets into the stream of intake air introduced into the inlet of the compressor.

Consequently, since the simplified practicable equipment can be used to supply fine liquid droplets to the air taken into the compressor and hence since the droplets can be appropriately made to adhere to the intake airstream supplied to the compressor, the gas including the droplets can be efficiently carried from the compressor inlet into the compressor. In addition, the droplets that have been introduced into the compressor can be vaporized under an appropriate state. This enables the improvement of gas turbine output and thermal efficiency.

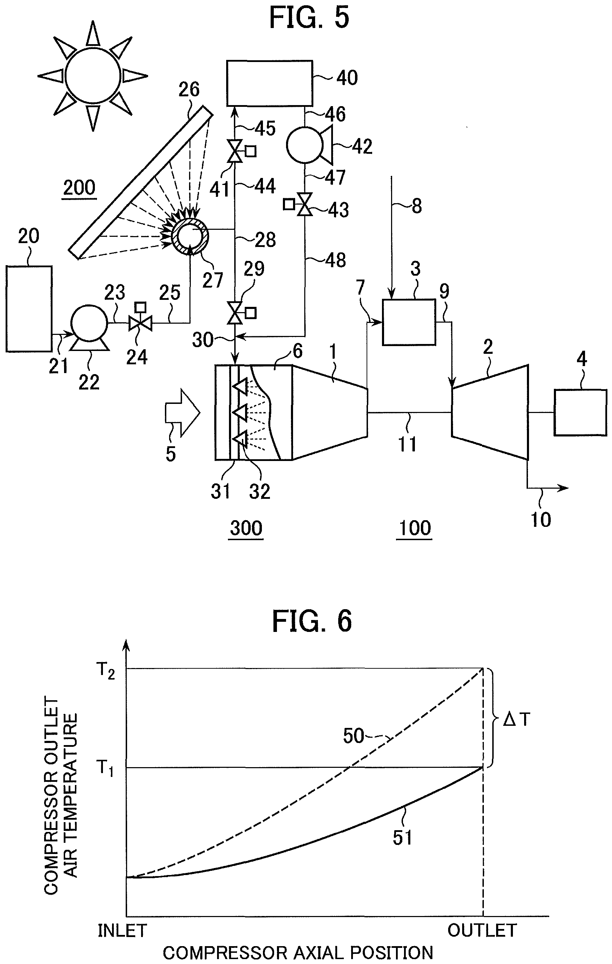

Fig. 6 is a temperature distribution diagram of the compressed air in the compressor. Air temperature T at an outlet of the compressor 1 in a case 51 of atomized water being sprayed and its droplets vaporized in the compressor 1 decreases more significantly than in a case 50 of no droplets being included in the gas. The air temperature T also decreases continuously inside the compressor.

The output boost mechanism according to the present embodiment can be arranged as follows in qualitative terms:

(1) Intake air cooling along lines of constant wet-bulb temperature, inside the air intake chamber into which the air is introduced from the compressor 1; (2) cooling of an internal gas by the vaporization of the droplets introduced into the compressor 1; (3) a differential pass-through quantity of working fluid between turbine 2 and compressor 1, which is equivalent to the amount of vaporization in the compressor 1; (4) an increase in low-pressure specific heat of the mixture formed by entry of water vapors of high specific heat under constant pressure; and more.

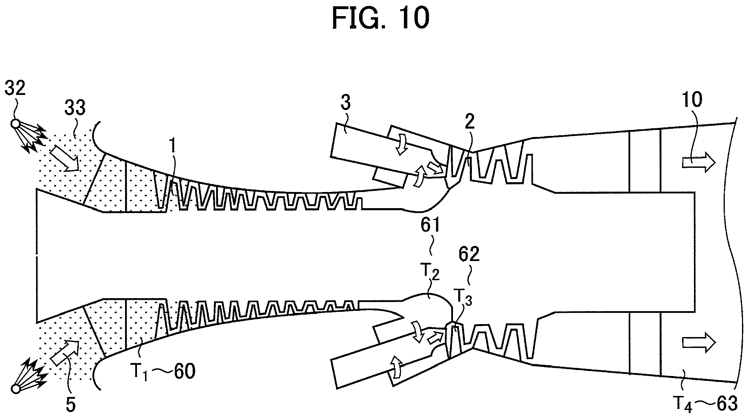

Fig. 10 is a detailed structural view of a gas turbine in another system configuration of the present invention. Fine liquid droplets upon being sprayed from each atomizing nozzle 32 into the stream of intake air are carried in from the compressor inlet by the airstream. The intake air streaming through the air intake chamber has an average air velocity of 20 m/s, for example. The droplets 33 move between blades of the compressor 1, along a flow line. Inside the compressor, the intake air is heated by adiabatic compression, and the droplets are further transported towards rear-stage blades while vaporizing sequentially from the surface and narrowing in particle size. During this process, the latent heat of vaporization that is required for the droplets to vaporize is covered from the air in the compressor, the temperature of the air in the compressor decreases more significantly than in a case of the present invention not being applied (see Fig. 6). If too large in particle size, the droplets will collide against the blades and casing of the compressor 1 and obtain heat from metals of the blades and casing to become vaporized. This vaporization is liable to block a temperature reduction effect of the working fluid. From this viewpoint, therefore, the droplets are preferably of a smaller particle size.

A distribution of particle sizes exists in the sprayed droplets. For suppressed collisions against the blades and casing of the compressor 1, and for minimal blade erosion, the droplets sprayed are set to have particle sizes, primarily, of 50 $\mu$m or less. For less significant influence upon the blades, the droplets are preferably set to be 50 $\mu$m in maximum particle size.

In consideration of the facts that droplets with a smaller particle size can be distributed more uniformly in inflow air and thus that the temperature distribution in the compressor occurs more easily, a further preferable particle size is 30 $\mu$m or less in Sauter mean diameter (SMD). The droplets jetted from the atomizing nozzles have a particle size distribution and are therefore not easy to measure in terms of the maximum particle size, so that measurements in the Sauter mean diameter (SMD) are applicable for practical purposes. Although a smaller particle size is preferable, since the atomizing nozzles that create droplets of a small particle size require a highly accurate fabrication skill, sizes down to a technically achievable lower limit lie in a practical range of particle sizes. In related terms, therefore, 1 $\mu$m, for example, is the lower limit useable for the above-described main particle size, maximum particle size, and mean diameter each. In addition, since droplets of a finer particle size require forming with greater energy, the energy to be used to form the droplets may be considered during determination of the lower limit. Setting a size that makes it difficult for the droplets to stray in the air and fall, generally provides an appropriate contact-surface state.

The vaporization of the droplets increases the weight flow rate of the working fluid. Upon completion of the vaporization in the compressor, the gas in the compressor 1 undergoes further adiabatic compression. During this process, in vicinity of a typical internal temperature of 300°C of the compressor, the specific heat of the steam under constant pressure is about twice that of air. In terms of heat capacity, this yields an effect equivalent to an increase in the amount of air as the working fluid by about twice the weight of the droplets vaporized. Briefly, the above characteristic is effective for reducing the compressor outlet air temperature T2' (temperature rise suppression effect). In this way, the vaporization of the droplets in the compressor causes the action of reducing the air temperature at the compressor outlet. Motive power of the compressor is equal to a difference in enthalpy between the compressor inlet air and outlet air, and air enthalpy is proportional to temperature, such that when the air temperature at the compressor outlet decreases, the motive power required of the compressor can be also reduced.

The compressor-pressurized working fluid (air) after being boosted in temperature by the combustor during fuel combustion, flows into the turbine, thereby performing expansion work. This work, called turbine shaft output, is equal to the differential enthalpy of the compressor outlet and inlet air. The amount of fuel charge is controlled for the turbine inlet gas temperature to stay in a predetermined temperature range. For example, the turbine inlet temperature is calculated from measurement results relating to the turbine outlet gas emission temperature and the compressor outlet pressure (pressure at compressor discharge port: Pcd). The flow of the fuel into the combustor 3 is controlled so that the calculated value equals a value obtained before the present invention was applied. The control for constant combustion temperature increases the fuel charge according to a particular decrease rate of the compressor outlet gas temperature T2', as described above. If the combustion temperature is invariant and the weight ratio of the water sprayed is only about a fraction of the intake air, the turbine inlet pressure and compressor outlet pressure before a start of the atomizing and spraying operation remain the same, in approximate terms, as those observed after the atomizing and spraying operation. Therefore, the turbine outlet gas temperature T4 also remains the same, which indicates that before and after the atomizing and spraying operation, the turbine remains the same in shaft output. In contrast, since net output of the gas turbine is a value obtained by subtracting the motive power of the compressor from the shaft output of the turbine, applying the present invention allows the net output of the gas turbine to be increased according to a particular decrease in the motive power of the compressor.

The turbine 2 can have its electrical output energy QE obtained by subtracting the work Cp (T2-T1) of the compressor 1 from the shaft output Cp (T3-T4) of the turbine 2, and QE can be expressed using the following equation. (Numerical expression 1)

$$QE/Cp = T3 - T4 - (T2 - T1) \qquad \text{(Numerical expression 1)}$$

The gas turbine is usually operated so that the combustion temperature T3 is constant. The gas turbine outlet temperature T4 is therefore invariant and the shaft output Cp (T3-T4) of the turbine is also constant. At this time, if the compressor outlet temperature T2 is reduced below T2' by the ingress of the atomized and sprayed water (i.e., T2'<T2), an equivalent of a decrease in the work of the compressor can be obtained as an output increase of T2-T2'. Efficiency $\eta$ of the gas turbine is given in approximate form by the following expression:
(Numerical expression 2)

$$\eta = 1 - \frac{T4 - T1}{T3 - T2} \qquad \text{(Numerical expression 2)}$$

In this case, since T2'<T2, it can be seen that since a second term on a right side takes a small value, water spraying also improves efficiency. In other terms, before and after the application of the present invention, the thermal energy Cp (T4-T1) discarded from a heat engine system of the gas turbine (i.e., the numerator in the second term of expression 2) remains much the same, whereas during the application of the invention, the fuel energy charged, Cp (T3-T2'), will increase with an increase in Cp (T2-T2'), or with a decrease in the work of the compressor. However, as described above, since the decrease in the compressor work is equal to the increase in output, substantially all of the increment in the amount of fuel is contributory to the increase in gas turbine output. That is, heat efficiency equivalent to the increase in output is 100%, for which reason, the heat efficiency of the gas turbine can be improved. In this way, total output of the gas turbine in the present embodiment can be enhanced by including a spray of water in the internal intake air of the compressor 1, for a reduction in compressor work not defined in the description of a conventional technique for cooling intake air. Another conventional technique relating to water injection into an inlet of the combustor 3, intended to boost an output level by increasing a flow rate of a working fluid, does not reduce the work itself of the compressor 1 and thus reduces efficiency on the contrary.

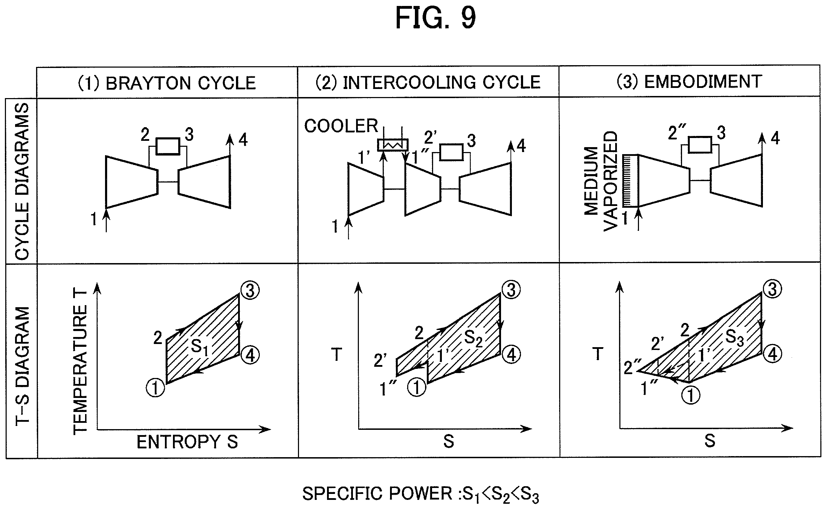

Fig. 9 is a diagram showing the heat cycle of the present embodiment by comparison with other heat cycles. An area of a closed region in the cycle diagram represents gas turbine output per unit flow rate of intake air, that is, specific power. Reference numbers in the cycle diagram denote the kinds of working fluids in corresponding locations of the diagram in each cycle. Reference number 1 in Fig. 9 denotes a compressor inlet, 1' an inlet of an intercooler from an outlet of a compressor of the first stage, 1" an inlet of a compressor of the second stage from an outlet of the intercooler, 2 a inlet of a combustor in a Brayton cycle, 2' an inlet of a combustor from an outlet of the compressor of the second stage, 3 an inlet of the turbine from an outlet of the combustor, and 4 an outlet of the turbine.

A temperature T-entropy S diagram in a lower field of Fig. 9 is a comparative representation of characteristics obtained when a relationship between temperature T and entropy S was fixed at positions 1, 3, and 4 in each cycle.

As is obvious from the figure, the specific power obtained by, as in the present embodiment, spraying the fine liquid droplets at the air intake chamber of the compressor and inducting these droplets from the compressor inlet, specific power in such an intercooling cycle as disclosed in JP-6-10702-A, and specific power in normal Brayton cycle are of greater magnitude in that order. The difference from the intercooling cycle, in particular, indicates that the present invention is derived from the fact that the droplets inducted into the compressor vaporize continuously from the compressor inlet, and this fact is expressed in the form of the cycle.

While the intercooling cycle is inferior to the Brayton cycle in heat efficiency, the present embodiment is superior to the Brayton cycle, as described and shown above, and the present invention is therefore higher than the intercooling cycle in heat efficiency.

In general, as the vaporizing position of sprayed droplets in the compressor 1 is closer to the inlet of the compressor 1, the air temperature at the outlet of the compressor 1 decreases, which is advantageous in terms of both boosting output and improving efficiency. In the method of mixing a spray of water into the streaming air 5 that is the intake air, a greater effect can be obtained with a smaller particle-spraying size, for the sprayed particles vaporize immediately after flowing into the compressor 1. In addition, the sprayed droplets become suspended in the air and are inducted in air-entrained form smoothly into the compressor.

The droplets jetted from the atomizing nozzles 32, therefore, are preferably of a size in which substantially all proportion of the droplets vaporizes before reaching the outlet of the compressor 1. Realistically, this proportion is lower than 100%, but can be of a maximum level attainable in the system configuration. For practical use, at least 90% of the droplets needs vaporizing at the compressor outlet.

For example, for a compressor outlet pressure Pcd of 0.84 MPa, vaporizing-ratio calculations considering a correlation between the absolute humidity at the compressor outlet, estimated from outside-air conditions, and the absolute humidity measured at an EGV position, indicate that at least 95% of the droplets vaporized before the compressor outlet was reached.

The time required for air to pass through the compressor is very short. A Sauter mean diameter (SMD) of 30 μm or less is desirable for adequate and more efficient vaporization of the droplets.

Since the atomizing nozzles that form droplets of a small particle size require a highly accurate fabrication skill, the minimum particle size that is technically achievable is a minimum applicable particle size, which is, for example, 1 μm.

This is because too large droplets make it more difficult for the compressor to appropriately vaporize the droplets.

The quantity of droplets to be inducted is adjustable according to temperature or humidity or a particular increase rate of turbine output. In consideration of the quantity of sprayed droplets vaporized while moving from their spraying position to the compressor inlet, at least 0.2 wt% of the intake air weight flow can be inducted. An upper limit thereof is preferably determined allowing for a level at which the compressor can properly maintain its function. For example, if an upper limit of 5.0 wt% is set, a preferable induction range is naturally up to 5.0 wt%.

Although the induction quantity of droplets is adjustable with, for example, seasonal timing, drying conditions, and other parameters taken into account, any quantity ranging between 0.8 wt% and 5.0 wt% can also be inducted for purposes such as obtaining a higher increase rate of turbine output.

In a certain type of conventional means for spraying droplets, the spraying of droplets (e.g., 100 to 150 μm in diameter) into the flow of air inducted into the inlet of a compressor is conducted only to reduce the temperature of the air inducted, and after the spraying operation, the water needs recovering for later re-atomizing and re-spraying. Compared with such a conventional type, one method according to the present embodiment only requires forming and spraying a small quantity of droplets.

Referring to atomized/sprayed water consumption, the amount of water consumed will reach its maximum when the output of the turbine that may decrease under a high-temperature atmosphere, probably in the summer, is restored to a rating. The amount of air consumed during the formation of a spray of water when the air is supplied under pressure cannot be ignored as motive power consumption, and a desirable measure of which is less than water consumption. Only if the particle size requirement is satisfied, therefore, will it be more economical for droplets with any one of the above-recommended particle sizes to be formed without air charge.

The present embodiment enables provision of a power-generating plant whose changes in output are suppressible through the year by adjusting the flow rate of atomized/sprayed water according to outside air temperature. For example, a regulator not shown has its valve angle position adjusted to obtain a higher water-spraying flow rate at a higher air-induction temperature into the compressor.

In addition, the droplets are preferably supplied during turbine operation at a constant combustion temperature. This improves output as well as efficiency.

In a gas turbine not intended for electric power generation, or in a gas turbine for obtaining a torque by driving the gas turbine, combustion temperature can be lowered for reduced turbine shaft output. Applying the present embodiment saves fuel during partially loaded operation.

In the present embodiment, output adjustment according to the load required is possible even in a range above an output level restricted by the outside air temperature.

Furthermore, since output can be improved even without elevating the combustion temperature, a longer-lived gas turbine can be provided.

Still furthermore, the present embodiment provides gas cooling in the compressor. If the compressor-extracted steam is used to cool the blades of the gas turbine by utilizing the gas-cooling function, therefore, the amount of extracted steam for cooling can be reduced, and by doing this, the amount of working fluid in the gas turbine can be increased;

higher efficiency and greater output are therefore expected to be achievable.

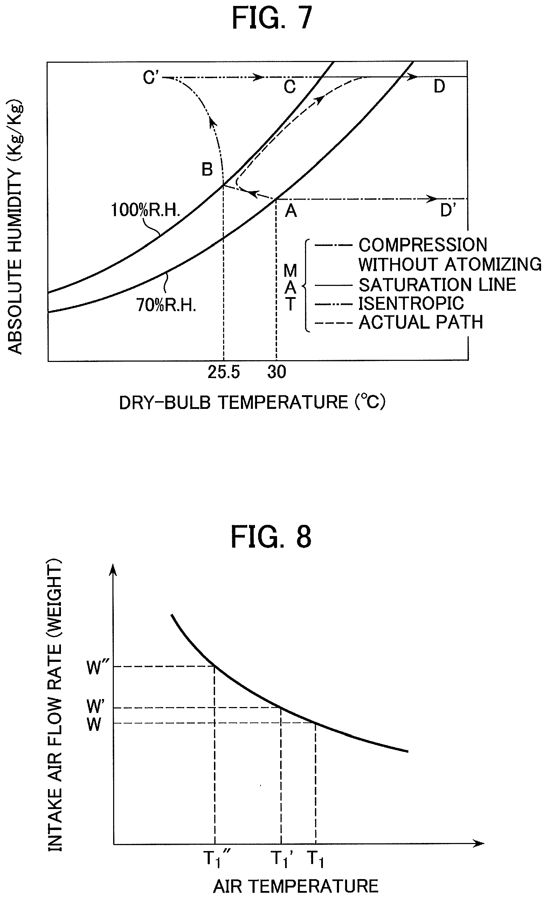

Figs. 7 and 8 are respectively a diagram that represents changes in a state of the working fluid in the processes of outside air being introduced into and compressed by the compressor 1, and a diagram that represents a relationship between the intake air temperature and the intake air weight flow rate.

Fig. 7 shows the state changes that assume an outside air temperature of 30°C and a relative humidity of 70%.

The outside air state is denoted by point A. Suppose that before the outside air flows into the compressor, the air is humidified and cooled along lines of constant wet-bulb temperature and reaches a wet, saturated state. The intake air then changes to state B at the inlet of the compressor 1. Humidity of the gas introduced into the compressor 1 by the spraying of the droplets is preferably increased to at least nearly 90% for accelerated vaporization of the droplets existing before being introduced into the compressor. The humidity is further preferably increased to at least 95% for accelerated cooling of the intake air. The droplets that have not been vaporized in the air intake chamber are continuously vaporized in the compression process of changing the state from B to C. If the saturated state is maintained during the vaporization, boiling is completed upon state C being reached, and in the process of the state changing from C to D, the fluid enters single-layer compression and increases in temperature. If the vaporization is regarded as an isoentropic change, the ending point of boiling means an arrival at a supersaturated state, that is, state C'. During actual operation, since the vaporization rate of water from the droplet state is finite, changes in state are considered to be thermally unbalanced and thus to deviate from a saturation line and follow a path denoted as a discontinuous line. In contrast to this, the state in normal compression phase follows a path extending from point A to point D'.

Referring to Fig. 7, if the temperature at point A is expressed as T1, and that of point B, as Tl', then an increase in intake air flow rate due to the temperature decrease from T1 to T1' will be from W to W', as schematically represented in Fig. 8. The remaining droplets are introduced into the compressor 1 and vaporized, thus contributing to reduction in the work of the compressor 1.

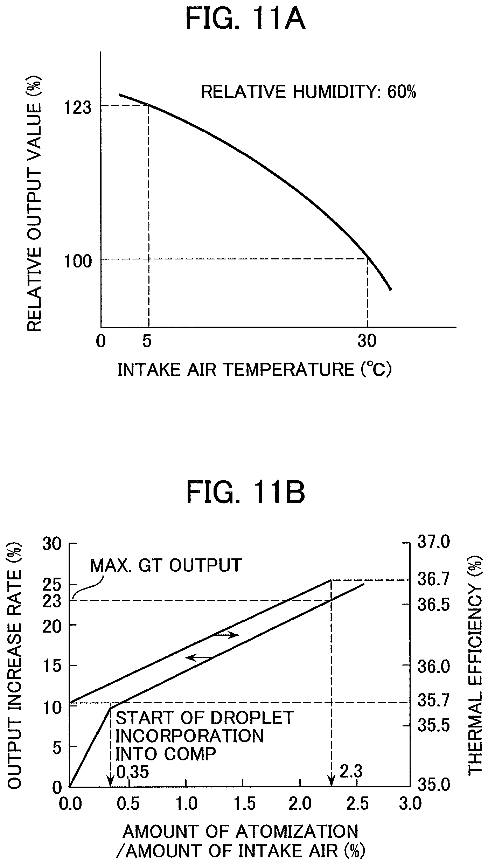

Figs. 11A and 11B show a relationship between the droplet spraying quantity and an increase rate of gas turbine output. Fig. 11A shows changes in relative output value with intake air temperature, and Fig. 11B shows a relationship between the spraying quantity and output boosting.

Calculations are performed based on an assumption of, for example, 35°C in outside air temperature, 53% in relative humidity, 417 kg/s in compressor air capacity, 0.915 in compressor polytropic efficiency, 0.89 in turbine adiabatic efficiency, 1,290°C in combustion temperature, 20% in compressor steam extraction volume, 1.48 MPa in delivery pressure, and 0.25 MPa in vaporizing stage pressure. When normal-temperature water is sprayed, 0.35% of the intake air flow rate is vaporized in the air intake chamber before the air flows into the compressor 1. The vaporization lowers the intake air temperature and enhances the air density, with the result that the weight flow rate of the air taken into the compressor will increase by several percent, contributing to boosting the output of the gas turbine. The remainder of the sprayed water will be entrained in the airstream, then drawn in the form of droplets into the compressor, and vaporized therein to contribute to reducing the work of the compressor.

The heat efficiency improvement ratio for 2.3% atomizing/spraying is 2.8% in terms of relative value. The amount of water to be consumed to restore gas turbine output to a 5°C base-loaded operation output level is nearly 2.3 wt% of the intake air weight flow. The output increment that was actually achieved by operating the gas turbine to restore output to its maximum value was broken down as follows by estimate: about 35% was based on cooling up to entry into the compressor 1; about 37% based on cooling by compressor internal vaporization; and 28% based on a differential volume of the working fluid passed through the turbine and the compressor, and on an increase in low-pressure specific heat due to inclusion of water vapors.

Although this is not represented in terms of scale in Figs. 11A, 11B, output boosting to an acceptable output level will likewise be obtainable by increasing the amount of water to be sprayed and assigning a sprayed-water flow rate of about 5 wt%. As the spraying quantity increases, the vaporization of the droplets that is an internal action of the compressor 1 becomes more influential upon output boosting, than cooling conducted outside the compressor 1.

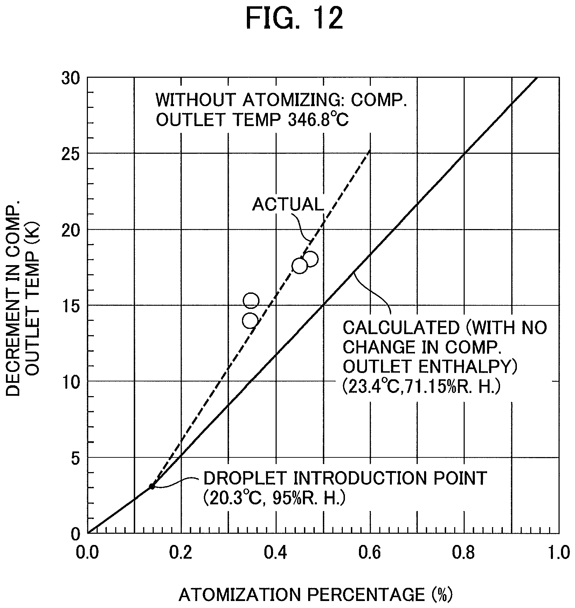

Fig. 12 represents a relationship between the quantity of spraying and a pre-spraying/post-spraying differential compressor outlet temperature, Fig. 12 indicates that the vaporization and cooling of the water before it enters the compressor 1 can be done at small flow rates efficiently. Maximum attainable humidity of the intake air flowing into the compressor 1 is in vicinity of about 95%. A solid line in Fig. 12 indicates a difference between compressor outlet gas temperature and pre-spraying temperature, calculated on two assumptions. One of the assumptions is that the absolute humidity of the compressor outlet gas, which is obtained by assuming that the droplets drawn into the inlet of the compressor 1 are 100% vaporized, is equal to the pre-spraying value. The other assumption is that the compressor outlet gas enthalpy, which is obtained by assuming that the droplets drawn into the inlet of the compressor 1 are 100% vaporized, is equal to the pre-spraying value. The solid line envisages that no reduction in motive power occurs. However, actual data denoted by white circles (shown with a discontinuous line to facilitate understanding) outstrips the solid line, indicating that the motive power is actually reduced. This reduction results from the fact that decrements in temperature due to vaporization are augmented during compression steps corresponding to post-vaporization blade stages of the turbine.

Partly because of this, the amount of vaporization of droplets which have been introduced into the compressor 1 by the atomizing nozzles 32 is preferably made larger at preceding stages than at following stages. For reduction in the motive power required of the compressor, therefore, it is considered to be effective to vaporize the introduced droplets primarily at the preceding stages.

The droplets are sprayed to such an extent that the temperature of the compressed air discharged from the compressor 1 will be at least 5°C lower than before the droplets are sprayed. For greater output, the discharging temperature of the compressed air is preferably at least 25°C lower. An upper limit can be determined from a practical viewpoint. For example, a maximum of 50°C is appropriate.

(Principles of fine-droplet forming by boiling under reduced pressure)

Next, principles of fine-droplet forming by boiling under reduced pressure are described in detail below.

The above has described an intake-ducted atomizer that sprays fine liquid droplets into an airstream before the air flows into the compressor, vaporizes a portion of the droplets before these droplets reach the compressor inlet, and vaporizes the remaining droplets in the compressor. This atomizer is effective in that when the droplets vaporize in the compressor, these droplets deprive an ambient gas of the latent heat of vaporization and suppress a temperature rise of compressed air. Because of this, the intake-ducted atomizer can be regarded as a device having substantially the same function as that of the intercooler in the humid-air turbine (HAT) cycle. Before the droplets are sprayed into the compressor inlet, however, these droplets need to have their particles sufficiently reduced to prevent the sprayed droplets from damaging the compressor blades and to ensure complete vaporization inside the compressor.

As described above, gas turbine equipment designed to form fine liquid droplets and spray them into a stream of the air (combustion enhancing gas) existing before it flows into the compressor has the effect that when the droplets vaporize, these droplets deprive an ambient gas of the latent heat of vaporization and suppress a temperature rise of compressed air. This effect leads to reducing the motive power required for compression.

Such an atomizer is desirably of an atomizing/spraying form that makes finer the particles of the droplets to be sprayed, needs smaller motive power to form the fine droplets to be sprayed, and is simpler in structure. Atomizing water before spraying it with pressurized air is useable as an example of an atomizing method. One problem associated with this method, however, is that since extra motive power is needed to supply the pressurized air, reduction in the motive power of the compressor by the atomizing and spraying effect is correspondingly lessened.

In the present embodiment, therefore, the temperature of the water to be supplied to the atomizer is controlled above a boiling point of water at the pressure of the air supplied to be compressor (i.e., atmospheric pressure), and after the high-pressure hot water has been atomized by boiling under reduced pressure, the resulting fine droplets are sprayed into a stream of the air taken into the compressor. More specifically, depressurization to the atmospheric pressure is conducted by the atomizing nozzles, and the water is then bubbled in the atomizing nozzles by boiling under reduced pressure to form finer droplet particles. Since the water to be atomized and sprayed is only supplied to the atomizing nozzles, the atomizer is very simple in structure and requires no pressurizing air. Accordingly, the effect that reduces the compressor motive power required is significant and high efficiency of the cycle can be attained.

This atomizing/spraying scheme accelerates the formation of the droplets sprayed and reduces the motive power necessary to obtain a desired droplet diameter. That is to say, a mean droplet diameter "d" per body area of the water sprayed from a single-hole nozzle of a diameter "dN" is represented as follows using jet-flow velocity "u", surface tension "σ", gas density "ρG", liquid viscosity coefficient "η", and liquid density "ρL":
(Numerical expression 3)

$$d = 83.14 \frac{d_N}{u} \left( \frac{\sigma}{\rho_G} \right)^{0.25} \times \left( 1 + 3.31 \frac{\eta}{\sqrt{\rho_L \sigma d_N}} \right)$$

...(Numerical expression 3)

It can be seen from this expression that when the nozzle diameter "dN" is constant, droplet diameter governing factors created by spraying are a temperature of the fluid, changes in physical properties due to a change in pressure, and the jet-flow velocity "u". When the temperature of the water to be sprayed increases, the surface tension "σ" and viscosity coefficient "η" thereof will decrease and the droplet diameter derived from expression 3 will also decrease as an overall consequence of the changes in the physical properties of the water. In addition, as the difference between the pre-spraying pressure and the pressure under the spraying environment becomes greater, the jet-flow velocity of the water will be higher and thus the droplet diameter smaller.

It can be seen from the above that the use of water higher in both temperature and pressure correspondingly accelerates the formation of the droplets sprayed. Additionally, when the water is sprayed under the conditions that the temperature of the water sprayed is higher than a boiling point of the water at a post-spraying ambient pressure, reduced-pressure boiling occurs, which generates bubbles in the atomizing nozzles and in the jet flow formed immediately after the water discharge from the nozzles. Consequently the droplets are further atomized. The further atomization of the droplets makes faster the vaporization of the droplets into the air, allowing a cooling effect by the vaporization of the droplets to be obtained within a shorter time.

In general, in terms of droplet vaporization, droplets of a higher temperature vaporize faster. For droplet vaporization in the compressor, as the vaporization occurs in a position closer to the inlet of the compressor, the cooling effect associated with the vaporization will also appear at following stages more clearly, with the motive-power reduction effect becoming greater and power-generating plant efficiency improving.

(Advantages from using solar heat energy in the atomizer)

In the present embodiment, since solar heat energy is used as the heat source for the high-pressure hot water sprayed, no other special sources of heat are required for the creation of the high-pressure hot water. In addition, since the atomizer in the present embodiment is intended to atomize the hot water into liquid droplets by means of boiling under reduced pressure, the embodiment requires no other special spraying devices for the creation of fine droplets.

Patent Document 2 discussed earlier herein discloses an invention concerning a gas turbine power-generating system of the HAT cycle, the invention providing a configuration in which an atomizer based on reduced-pressure boiling is installed at the inlet of a compressor. However, the heating source for the water sprayed, in Patent Document 2, uses devices specific to the regenerative cycle, namely an aftercooler provided at the outlet of the compressor, a humidifier for humidifying compressed air, a heat exchanger for heating the humidifier-humidified water, and other characteristic devices of the regenerative cycle. In other words, since the system in Patent Document 2 is intended for the regenerative cycle and since the system has the configuration under which high-pressure hot water is created in the cycle, the high-pressure hot water created in the cycle can also be used as the water to be sprayed.

In such a gas turbine cycle originally not including a device for creating high-pressure hot water in the cycle, that is, in a simple cycle using only three elements (a compressor, a combustor, and a turbine), extensive modification of the gas turbine equipment is required since the heating source for the high-pressure hot water which is to be sprayed is turbine gas emissions. More specifically, it is necessary to add other elements such as a heat exchanger for recovering waste heat from the gas turbine gas emissions, and a feedwater system for supplying the exchanger-generated high-pressure hot water to the atomizer.

In addition, both a cogenerator system that generates steam (heat) along with electricity, and a combined-cycle turbine system that is a combination of a gas turbine and a steam turbine, presuppose using gas turbine waste heat as the heating source for steam generation. In these systems, the design for a heat balance in the entire system is based on the amount of heat required for steam generation. Therefore, if the waste heat from the gas turbine is used to generate the high-pressure hot water to be sprayed into a flow of intake air, the probable disturbance in the heat balance of the entire system is likely to affect the generation of steam, which is the original purpose of the turbine. For this reason, it is not preferable that such a system be configured that causes the disturbance in the gas turbine heat balance due to the use of the gas turbine waste heat. To apply a gas turbine to a system that uses solar heat, therefore, a system configuration that disturbs the heat balance should be avoided and it is desirable that the gas turbine apparatus itself should also minimize any changes made to its basic configuration.

In the present embodiment, on the other hand, since solar heat energy is used as the heating source for the generation of high-pressure hot water, when a gas turbine is applied to a solar thermal power-generating system, the gas turbine apparatus can minimize any changes made to its standard configuration. This means that only an atomizer is to be installed as an additional device at an upstream end of a compressor (i.e., in an air intake chamber or an air intake duct). In addition, in terms of heat balance as well, high-pressure hot water is created not by using the heat in the gas turbine cycle and can be created independently of the gas turbine apparatus specifications, so no disturbance is caused to the heat balance. This is achieved because the system that uses solar heat as the air taken into the compressor is positioned at substantially the most upstream end of the gas turbine apparatus.

As described above, the present embodiment applies the atomizer by which the high-pressure hot water previously generated using solar heat is cooled by spraying liquid droplets into a stream of the air previously taken into the compressor, and uses energy of the hot water to form the fine droplets prior to spraying from the atomizer. In particular, the formation of the droplets to be sprayed is implemented by boiling the hot water under reduced pressure.

In the power-generating system of the present embodiment that employs the above scheme, only the sensible heat of solar heat, that is equivalent to the amount of heat for changing only a temperature of a substance without changing a state thereof, needs to be collected for creating high-pressure hot water. The system according to the present invention, therefore, makes it unnecessary the large amount of energy that has been an absolute requirement as the latent heat of evaporation in conventional systems. This enables significant reduction in the number of heat collectors to be installed to collect energy, and in the site area required for the installation of the heat collectors.

To be more specific, the installation area requirement for the heat collectors can be reduced below 1/10 of the numbers in the conventional systems. Significant cost reduction is also possible since installation costs of the heat collectors accounts for a majority of the total costs in the solar thermal system.

In addition, since the present embodiment utilizes solar heat for lowering compressor inlet temperature, this enables a power-generating system to be supplied, which has an ability to improve generator output without increasing $CO_2$ that is one of greenhouse effect gases, thus the system being favorable for environment protection. In particular, no special atomizer is required for the formation of liquid droplets in the embodiment. Furthermore, the atomizer in the present embodiment is intended to atomize hot water into droplets using the principles of boiling under reduced pressure, and uses solar heat as the energy, so that motive power is reduced relative to that of general atomizers. Moreover, further droplet atomization based on boiling under reduced pressure, reduces drain effluents significantly and improves output more efficiently.

Second Embodiment

Next, a system configuration in a second embodiment of the present invention will be described with Fig. 5.

The system in Fig. 5 features including a heat storage tank 40 to suppress changes in output due to variations in the quantity of solar radiation in the first embodiment of Fig. 1. System components different from those of Fig. 1 are described below.

A water line 28 for pumping out high-pressure hot water from a heat collection tube 27 is connected to a branch line 44. A downstream end of the branch line 44 is connected to the heat storage tank 40 via a flow-regulating valve 41 and a line 45. The heat storage tank 40 has a downstream end to which a transport pump 42, a line 47, a pressure-regulating valve 43, a line 48 are connected via a line 46, and the line 48 is connected to a line 30 at a downstream end of a pressure-regulating valve 29.

The system according to the present embodiment has the configuration with fluid-related devices and lines connected in this way so that the high-pressure hot water that has been generated in the heat collection tube 27 of a heat collector 200 is stored in the storage tank 40. The system is further constructed so that the high-pressure hot water stored within the storage tank 40 can be supplied to atomizing nozzles 32 of an atomizer 300. As can be seen from this configuration, the system includes a circuit that supplies from the heat collection tube 27 directly to the atomizing nozzles 32 the high-pressure hot water generated in the heat collection tube 27, and a circuit for indirect supply of the hot water via storage in the storage tank 40.

(Operation and effects)

Next, operation of the embodiment in Fig. 5 is described below.

Under favorable solar radiation conditions, the heat collection tube 27 increases in temperature. In this case, although the amount of light focused can be adjusted by changing a light-receiving surface angle of a light-focusing plate 26, the heat storage tank 40 becomes effective as a complement to compensate for decreases in solar radiation conditions. More specifically, the flow-regulating valve 41 is opened to transport a portion of the high-pressure hot water to the branch line 44 connected to the line 28, and store the hot water into the storage tank 40 via the line 45. When the solar radiation conditions degrade, the high-pressure hot water within the storage tank 40 is pumped out through the line 46 by the transport pump 42, then inducted from the line 48, via the line 47 and the pressure-regulating valve 43, to the line 30, to replenish an atomizer main tube 31 with high-pressure hot water. Thus, even if the amount of high-pressure hot water in the heat collection tube 27 runs short, high-pressure hot water can be added from the heat storage tank 40, and stable cooling of intake air by a compressor 1 is therefore achieved.

According to the present embodiment, in addition to the advantageous effects in the first embodiment being attained, decreases in an output level of the gas turbine power-generating system in hot times such as the summer can be stably suppressed without being impacted by changes in weather. Furthermore, solar energy availability improves, which in turn contributes to reduction in emissions of $CO_2$, one of greenhouse effect gases.

Third Embodiment

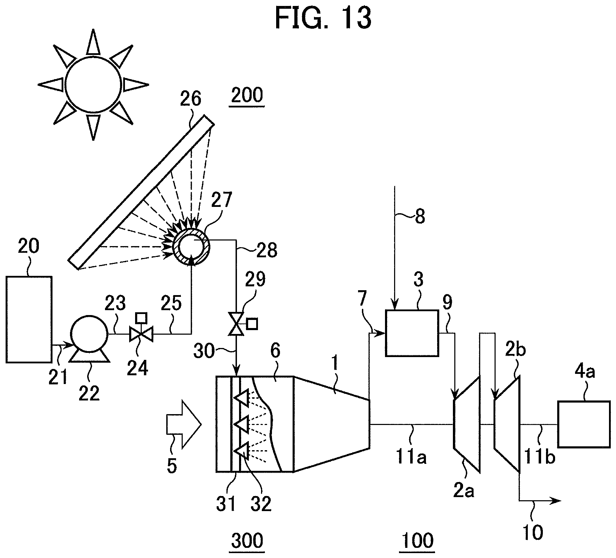

Next, an embodiment of applying solar heat to a gas turbine system that drives devices other than an electric power generator is described below using Fig. 13. That is to say, while the first embodiment has applied solar heat to a gas turbine power-generating system, the present (third) embodiment is constructed to use solar heat energy in a gas turbine system that drives a pump, a compressor, and other load devices. The present embodiment also applies a twin-shaft gas turbine.

Differences from the foregoing embodiments are described in detail below. The gas turbine apparatus 100 in the present embodiment is a twin-shaft gas turbine with separated rotating shafts of a gas generator and a power turbine. The twin-shaft gas turbine, compared with single-shaft gas turbines, has high operational flexibility and improves partial loading performance. When an electric power generator is to be driven as a load of the gas turbine, the generator is basically driven at a constant (rated) speed since power generators are commonly operated at their rated loads. When a compressor or a pump is to be driven as a load, since these load devices presuppose the operation that causes load changes, it is advantageous to apply the twin-shaft gas turbine excellent in partial loading performance, as a driving source for those devices.

Structural features of the twin-shaft gas turbine are that the turbine 2 includes a high-pressure turbine 2a and a low-pressure turbine 2b, that the high-pressure turbine 2a is connected to a compressor 1 via a shaft 11a, and that the low-pressure turbine 2b is connected to a device driven as a load via a second shaft 11b, which is independent of the shaft 11a. The gas generator is constituted by the compressor 1, the high-pressure turbine 2a, and a combustor 3, and the power turbine corresponds to the low-pressure turbine 2b. As is understandable by contrast with Fig. 1, system components other than the turbine are basically the same between the single-shaft type and the twin-shaft type. The high-pressure turbine 2a sharing one shaft with the compressor 1 is rotationally driven by combustion gases generated by the combustor 3, and the low-pressure turbine 2b connected to a load device via a shaft different from that connected to the compressor 1 is rotationally driven by combustion gases generated by the rotational driving of the high-pressure turbine 2a.

In the present embodiment using the twin-shaft gas turbine, a solar heat collector 200 and an atomizer 300 that atomizes high-pressure hot water before spraying the hot water into a stream of the air previously taken into the compressor 1 are installed in a layout form similar to those of the foregoing embodiments. The present embodiment also is substantially the same as the above embodiments in that the high-pressure hot water generated by the heat collector 200 is supplied to the atomizer 300, and in that the supplied high-pressure hot water is atomized into fine droplets using the principles of boiling under reduced pressure. Although the twin-shaft gas turbine has been described and shown by way of example as the load-driving apparatus, a single-shaft gas turbine can be used as an alternative. The twin-shaft gas turbine described and shown in the present embodiment can also be applied to a gas turbine power-generating system.

According to the present embodiment, in addition to the advantageous effects in the first embodiment, an advantageous effect that a decrease in an output level of the gas turbine system which drives a pump and/or a compressor as load devices is suppressed, can be obtained.

Fourth Embodiment

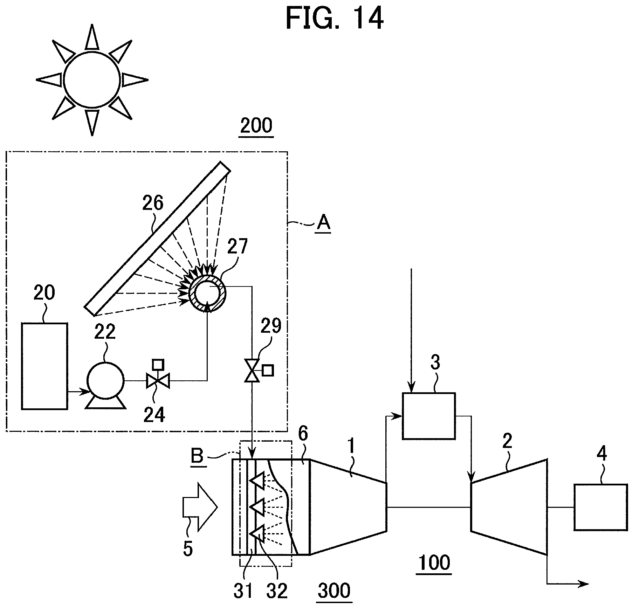

Next, an embodiment relating to modifying an existing gas turbine system into one that uses solar heat is described below using Fig. 14.

When a gas turbine apparatus 100, as an existing gas turbine system, is installed, modifying the existing gas turbine system into a solar assisted gas turbine system involves adding a solar heat collector 200 (region boxed with single-dotted line A in Fig. 14) and an atomizer 300

(region boxed with double-dotted line B in Fig. 14), the atomizer being constructed to atomize high-pressure hot water that has been generated by the heat collector 200, and then spray the hot water into a stream of the air previously taken into a compressor 1. The heat collector 200 is disposed at a site neighboring the location of the existing gas turbine. The atomizer 300 is newly installed in an air intake duct (or an air intake chamber) of the existing gas turbine.

When attention is focused upon the gas turbine apparatus 100, in particular, the modification of the existing gas turbine into a solar assisted gas turbine system is characterized in that only the air intake duct 6 of the existing gas turbine needs modifying. In other words, there is no need to introduce a change in the gas turbine unit itself, so the modification only requires a relatively short period of time. In addition, the modification is minor in scale and simple. Furthermore, no system reviews are required.

Furthermore, the modification of the existing gas turbine into a solar assisted gas turbine system does not require a large site area since the number of heat collectors required is only as large as is sufficient to generate the amount of high-pressure hot water required. Additional heat collectors 200 can be set up in premises of a related existing power plant. In general, power plants, factories, and the like possess a certain expanse of open space, besides buildings, so that when an available space is present there, the application of the present embodiment leads to land utilization.

In addition to the advantageous effects in the first embodiment, the present (fourth) embodiment yields the effect of an existing gas turbine being modifiable into a solar assisted gas turbine system. Additionally, the modification does not require a long period of time and is simple.

Industrial Applicability

The prevent invention can be used as a solar assisted gas turbine system.

Description of Reference Numerals

| | |
|---|---|
| 1 | Compressor |
| 2 | Turbine |
| 3 | Combustor |
| 4 | Electric power generator |
| 5 | Air |
| 6 | Air intake duct |
| 7 | Compressed air |
| 8 | Fuel |
| 9 | Combustion gas |
| 10 | Combustion waste gas |
| 11 | Shaft |
| 20 | Water tank |
| 21, 23, 25 | Feedwater line |
| 22 | Water pump |
| 24, 41 | Flow-regulating valve |
| 26 | Light-focusing plate |
| 27 | Heat collection tube |
| 28, 30, 45, 46, 47, 48 | Water line |
| 29, 43 | Pressure-regulating valve |
| 31 | Atomizer main tube |
| 32 | Atomizing nozzle |
| 33 | Liquid droplet |
| 34 | Fluid mixture |
| 35 | Stationary blade |
| 36 | Moving blade |
| 40 | Heat storage tank |
| 42 | Transport pump |
| 44 | Branch line |
| 100 | Gas turbine apparatus |
| 200 | Heat collector |
| 300 | Atomizer |

## Claims

**1.** A solar assisted gas turbine system, comprising:

a compressor (1) for compressing air;
a combustor (3) for burning the compressor-compressed air and a fuel;
a gas turbine including a turbine (2) driven by combustion gases generated in the combustor (3);
**characterized in that**
the solar assisted gas turbine system further comprises:

a heat collector (200) for collecting solar heat, heating pressure-boosted water with the solar heat to a temperature that is higher than a boiling point under an atmospheric pressure and is lower than a boiling point under the boosted pressure, and creating high-pressure hot water; and
an atomizer (300) that depressurizes the high-pressure hot water to an atmospheric pressure, thereby atomizing the high-pressure hot water, and sprays the atomized hot water into a flow of air taken into the compressor (1).

**2.** The solar assisted gas turbine system according to claim 1, wherein the heat collector (200) uses a pressure equal to or higher than an atmospheric pressure and equal to or higher than a saturation pressure, to create the high-pressure hot water under a liquid phase state.

**3.** The solar assisted gas turbine system according to claim 1, wherein the heat collector (200) includes a light-focusing plate (26) that focuses solar light, and a heat collection tube (27) internally formed to allow water to circulate therethrough, the collection tube being used to receive the solar light focused by the light-focusing plate (26) and collect solar heat of the received light; and wherein pressurized water is supplied to the heat collection tube (27) .

**4.** The solar assisted gas turbine system according to claim 1, wherein the atomizer (300) vaporizes a part of liquid droplets sprayed before being inducted into the compressor (1), the atomizer (300) further vaporizing unvaporized droplets flowing downward inside the compressor (1) after being inducted thereinto along with the air taken therein.

**5.** The solar assisted gas turbine system according to claim 2, wherein the atomizer (300) sprays liquid droplets ranging between 1 μm and 50 μm in particle size, a quantity of the droplets being equivalent to a water quantity ranging between 0.2% and 5.0% of a weight flow rate of the air taken into the compressor (1).

**6.** The solar assisted gas turbine system according to claim 1, wherein the atomizer (300) is installed in an air intake duct (6) or air intake chamber of the gas turbine.

**7.** The solar assisted gas turbine system according to claim 1, wherein the heat collector (200) is connected to a heat storage tank (40) for storage of the high-pressure hot water created by the collector (200).

**8.** The solar assisted gas turbine system according to claim 7, wherein the atomizer (300) is connected to a circuit that supplies high-pressure hot water directly from the heat collector (200), and a circuit that supplies high-pressure hot water stored in the storage tank.

**9.** The solar assisted gas turbine system according to claim 1, wherein:

the turbine (2) includes a high-pressure turbine and a low-pressure turbine;
the high-pressure turbine, sharing one shaft with the compressor (1), is rotationally driven by combustion gases generated by the combustor (3); and
the low-pressure turbine, connected to a shaft different from that connected to the compressor (1), is rotationally driven by combustion gases generated by the rotational driving of the high-pressure turbine.

**10.** A method for modifying an existing gas turbine into a solar assisted gas turbine system, the existing gas turbine including a compressor (1) that compresses air, a combustor (3) that burns the air compressed by compressor (1) and a fuel, and a turbine (2) driven by combustion gases that the combustor (3) has generated;
**characterized in that**
the method comprising:

arranging around the existing gas turbine a plurality of heat collectors (200) formed to collect solar heat, heat pressure-boosted water with the solar heat to a temperature that is higher than a boiling point under an atmospheric pressure and is lower than a boiling point under the boosted pressure, and create high-pressure hot water; and
additionally providing, in an air intake duct (6) or air intake chamber of the existing gas turbine, an atomizer (300) that depressurizes the high-pressure hot water to an atmospheric pressure, thereby atomizing the high-pressure hot water, and sprays the atomized hot water into a stream of the air taken into the compressor (1).

### Patentansprüche

**1.** Solargestütztes Gasturbinensystem, das Folgendes umfasst:

einen Kompressor (1) zum Verdichten von Luft;
eine Verbrennungsvorrichtung (3), um die kompressorverdichtete Luft und einen Brennstoff zu verbrennen;
eine Gasturbine, die eine Turbine (2), die durch in der Verbrennungsvorrichtung (3) erzeugte Verbrennungsgase angetrieben wird, enthält;
**dadurch gekennzeichnet, dass**
das solargestützte Gasturbinensystem ferner Folgendes umfasst:

einen Wärmekollektor (200) zum Sammeln von Solarwärme, Erhitzen von druckgefördertem Wasser mit der Solarwärme auf eine Temperatur, die höher als ein Siedepunkt unter einem Atmosphärendruck ist und niedriger als ein Siedepunkt unter dem gefördertem Druck ist, und Erzeugen von Hochdruckheißwasser und einen Zerstäuber (300), der den Druck des Hochdruckheißwassers auf einen Atmosphärendruck herabsetzt, wodurch er das Hochdruckheißwasser zerstäubt und das zerstäubte Heißwasser in einen Strom von Luft, die in den Kompressor (1) aufgenommen wird, sprüht.

**2.** Solargestütztes Gasturbinensystem nach Anspruch 1, wobei der Wärmekollektor (200) einen Druck verwendet, der gleich oder höher als ein Atmosphärendruck und gleich oder höher einem Sättigungsdruck ist, um das Hochdruckheißwasser unter einem Flüssigphasenzustand zu erzeugen.

**3.** Solargestütztes Gasturbinensystem nach Anspruch 1, wobei der Wärmekollektor (200) eine Lichtfokussierplatte (26), die Solarlicht fokussiert, und ein Wärmesammelrohr (27), das innen gebildet ist und durch das Wasser zirkulieren kann, enthält, wobei das Sammelrohr verwendet wird, das Solarlicht, das durch die Lichtfokussierplatte (26) fokussiert wurde, aufzunehmen und Solarwärme des empfangenen Lichts zu sammeln; und wobei dem Wärmesammelrohr (27) druckbeaufschlagtes Wasser zugeführt wird.

**4.** Solargestütztes Gasturbinensystem nach Anspruch 1, wobei der Zerstäuber (300) einen Teil von gesprühten Flüssigkeitströpfchen verdampft, bevor sie in den Kompressor (1) eingeführt werden, und der Zerstäuber (300) ferner nicht verdampfte Tröpfchen, die im Kompressor (1) stromabwärts strömen, nachdem sie zusammen mit der in ihn aufgenommenen Luft in ihn eingeführt wurden, verdampft.

**5.** Solargestütztes Gasturbinensystem nach Anspruch 2, wobei der Zerstäuber (300) Flüssigkeitströpfchen sprüht, die in ihrer Partikelgröße im Bereich von 1 $\mu$m bis 50 $\mu$m liegen, und eine Menge der Tröpfchen gleich einer Wassermenge ist, die im Bereich von 0,2 % bis 5,0 % einer Gewichtsdurchflussmenge der Luft, die in den Kompressor (1) aufgenommen wird, liegt.

**6.** Solargestütztes Gasturbinensystem nach Anspruch 1, wobei der Zerstäuber (300) in einem Lufteinlasskanal (6) oder einer Lufteinlasskammer der Gasturbine installiert ist.

**7.** Solargestütztes Gasturbinensystem nach Anspruch 1, wobei der Wärmekollektor (200) mit einem Wärmespeicherbehälter (40) zum Speichern des Hochdruckheißwassers, das durch den Kollektor (200) erzeugt wird, verbunden ist.

**8.** Solargestütztes Gasturbinensystem nach Anspruch 7, wobei der Zerstäuber (300) mit einem Kreis, der Hochdruckheißwasser vom Wärmekollektor (200) direkt zuführt, und einem Kreis, der Hochdruckheißwasser, das im Speicherbehälter gespeichert ist, zuführt, verbunden ist.

**9.** Solargestütztes Gasturbinensystem nach Anspruch 1, wobei die Turbine (2) eine Hochdruckturbine und eine Niederdruckturbine enthält;
die Hochdruckturbine, die eine Welle mit dem Kompressor (1) gemeinsam verwendet, durch Verbrennungsgase, die durch die Verbrennungsvorrichtung (3) erzeugt werden, rotatorisch angetrieben wird; und
die Niederdruckturbine, die mit einer Welle, die von der, die mit dem Kompressor (1) verbunden ist, verschieden ist, verbunden ist, durch Verbrennungsgase, die durch das rotatorische Antreiben der Hochdruckturbine erzeugt werden, rotatorisch angetrieben wird.

**10.** Verfahren zum Umwandeln einer vorhandenen Gasturbine in ein solargestütztes Gasturbinensystem, wobei die vorhandenen Gasturbine einen Kompressor (1), der Luft verdichtet, eine Verbrennungsvorrichtung (3), die die durch den Kompressor (1) verdichtete Luft und einen Brennstoff verbrennt, und eine Turbine (2), die durch die Verbrennungsvorrichtung (3) erzeugte Verbrennungsgase, die hat, angetrieben wird, enthält; wobei
das Verfahren **gekennzeichnet ist durch**
Anordnen um die vorhandene Gasturbine mehrerer Wärmekollektoren (200), die gebildet sind, um Solarwärme zu sammeln, druckgefördertes Wasser mit der Solarwärme auf eine Temperatur, die höher als ein Siedepunkt unter einem Atmosphärendruck ist und niedriger als ein Siedepunkt unter dem gefördertem Druck ist, zu erhitzen und Hochdruckheißwasser zu erzeugen; und
zusätzliches Bereitstellen in einem Lufteinlasskanal (6) oder einer Lufteinlasskammer der vorhandenen Gasturbine eines Zerstäubers (300), der den Druck des Hochdruckheißwassers auf einen Atmosphärendruck herabsetzt, wodurch er das Hochdruckheißwasser zerstäubt und das zerstäubte Heißwasser in einen Strom der Luft, die in den Kompressor (1) aufgenommen wird, sprüht.

## Revendications

1. Système de turbine à gaz assisté par énergie solaire, comprenant :

   un compresseur (1) pour comprimer de l'air ;
   une unité de combustion (3) pour brûler l'air comprimé par le compresseur et un combustible ;
   une turbine à gaz incluant une turbine (2) entraînée par des gaz de combustion générés dans l'unité de combustion (3) ;
   **caractérisé en ce que**
   le système de turbine à gaz assisté par énergie solaire comprend en outre :

   un collecteur de chaleur (200) pour collecter de la chaleur solaire, pour chauffer de l'eau sous pression avec la chaleur solaire à une température qui est supérieure à un point d'ébullition sous une pression atmosphérique et qui est inférieure à un point d'ébullition sous la pression, et pour produire une eau chaude à haute pression ; et
   un atomiseur (300) qui dépressurise l'eau chaude à haute pression à une pression atmosphérique, atomisant ainsi l'eau chaude à haute pression, et qui pulvérise l'eau chaude atomisée dans un flux d'air admis jusque dans le compresseur (1).

2. Système de turbine à gaz assisté par énergie solaire selon la revendication 1, dans lequel le collecteur de chaleur (200) utilise une pression égale ou supérieure à une pression atmosphérique, et égale ou supérieure à une pression de saturation pour produire l'eau chaude à haute pression sous un état de phase liquide.

3. Système de turbine à gaz assisté par énergie solaire selon la revendication 1, dans lequel le collecteur de chaleur (200) inclut une plaque de concentration de lumière (26) qui concentre la lumière solaire, et un tube collecteur de chaleur (27) formé intérieurement pour permettre à l'eau de circuler à l'intérieur de celui-ci, le tube collecteur étant utilisé pour recevoir la lumière solaire concentrée par la plaque de concentration de lumière (26) et pour collecter la chaleur solaire de la lumière reçue ; et dans lequel l'eau pressurisée est alimentée vers le tube collecteur de chaleur (27).

4. Système de turbine à gaz assisté par énergie solaire selon la revendication 1, dans lequel l'atomiseur (300) vaporise une partie des gouttelettes de liquide pulvérisées avant d'être introduites dans le compresseur (1), l'atomiseur (300) vaporisant en outre des gouttelettes non vaporisées s'écoulant vers le bas à l'intérieur du compresseur (1) après être introduites à l'intérieur de celui-ci avec l'air admis à l'intérieur.

5. Système de turbine à gaz assisté par énergie solaire selon la revendication 2, dans lequel l'atomiseur (300) pulvérise des gouttelettes de liquide présentant une taille de particule dans une plage allant de 1 $\mu$m à 50 $\mu$m, une quantité des gouttelettes étant équivalente à une quantité d'eau dans une plage de 0,2 % à 5,0 % d'un débit pondéral de l'air admis dans le compresseur (1).

6. Système de turbine à gaz assisté par énergie solaire selon la revendication 1, dans lequel l'atomiseur (300) est installé dans un conduit d'admission d'air (6) ou dans une chambre d'admission d'air de la turbine à gaz.

7. Système de turbine à gaz assisté par énergie solaire selon la revendication 1, dans lequel le collecteur de chaleur (200) est connecté à un réservoir de stockage de chaleur (40) pour stocker l'eau chaude à haute pression produite par le collecteur (200).

8. Système de turbine à gaz assisté par énergie solaire selon la revendication 7, dans lequel l'atomiseur (300) est connecté à un circuit qui alimente de l'eau chaude à haute pression directement depuis le collecteur de chaleur (200), et à un circuit qui alimente de l'eau à haute pression stockée dans le réservoir de stockage.

9. Système de turbine à gaz assisté par énergie solaire selon la revendication 1, dans lequel :

   la turbine (2) inclut une turbine à haute pression et une turbine à basse pression ;
   la turbine à haute pression, partageant un arbre avec le compresseur (1), est entraînée en rotation par des gaz de combustion générés par l'unité de combustion (3) ; et
   la turbine à basse pression, connectée à un arbre différent de celui qui est connecté au compresseur (1), est entraînée en rotation par des gaz de combustion générée par l'entraînement en rotation de la turbine à haute pression.

**10.** Procédé pour modifier une turbine à gaz existante en un système de turbine à gaz assisté par énergie solaire, la turbine à gaz existante incluant un compresseur (1) qui comprime de l'air, une unité de combustion (3) qui brûle l'air comprimé par le compresseur (1) et un combustible, et une turbine (2) entraînée par des gaz de combustion que l'unité de combustion (3) a générés ;
**caractérisé en ce que**
le procédé comprend les étapes consistant à :

agencer autour de la turbine à gaz existante une pluralité de collecteurs de chaleur (200) formés pour collecter de la chaleur solaire, pour chauffer de l'eau sous pression avec la chaleur solaire à une température qui est supérieure à un point d'ébullition sous une pression atmosphérique et qui est inférieure à un point d'ébullition sous la pression, et pour produire de l'eau chaude à haute pression ; et
prévoir additionnellement, dans un conduit d'admission d'air (6) ou une chambre d'admission d'air de la turbine à gaz existante, un atomiseur (300) qui dépressurise l'eau chaude à haute pression à une pression atmosphérique, atomisant ainsi l'eau chaude à haute pression, et qui pulvérise l'eau chaude atomisée dans un flux de l'air admis dans le compresseur (1).

FIG. 1

200
26
27
8
20
28
29
3
23
25
7
9
30
6
1
2
4
21
24
22
5
11
31
32
10
300
100

# FIG. 2

100
90
80
70
60
50
GAS TURBINE GENERATOR OUTPUT RATIO (%)
0
10
20
30
40
50
ATMOSPHERIC TEMPERATURE AT GAS TURBINE COMPRESSOR INLET (℃)

# FIG. 3

30
33
6
35
1
7
5
32
-Q
11
5
31
34
36

# FIG. 4

SATURATION PRESSURE (MPa),
OPERATING PRESSURE (MPa)
5.0
4.5
4.0
3.5
3.0
2.5
2.0
1.5
1.0
0.5
0.0
OPERATING PRESSURE LINE
SATURATION PRESSURE LINE
100
125
150
175
200
225
250
WATER TEMPERATURE (°C)

RELATIONSHIP BETWEEN WATER TEMPERATURE AND SATURATION PRESSURE/OPERATING PRESSURE (EXAMPLE)

# FIG. 5

40
26
46
45
42
200
41
44
47
43
8
20
28
48
27
29
3
23
25
7
9
30
6
1
2
4
21
22
24
5
11
31
32
10
300
100

# FIG. 6

T2
T1
ΔT
50
51
COMPRESSOR OUTLET AIR TEMPERATURE
INLET
OUTLET
COMPRESSOR AXIAL POSITION

# FIG. 7

C'
C
D
B
100%R.H.
A
D'
70%R.H.
MAT
COMPRESSION WITHOUT ATOMIZING
SATURATION LINE
ISENTROPIC
ACTUAL PATH
ABSOLUTE HUMIDITY (Kg/Kg)
25.5
30

DRY-BULB TEMPERATURE (°C)

# FIG. 8

INTAKE AIR FLOW RATE (WEIGHT)
W″
W'
W
T1″
T1'
T1
AIR TEMPERATURE

FIG. 9
CYCLE DIAGRAMS
T-S DIAGRAM
(1) BRAYTON CYCLE
(2) INTERCOOLING CYCLE
(3) EMBODIMENT
COOLER
MEDIUM VAPORIZED
TEMPERATURE T
ENTROPY S
T
S
SPECIFIC POWER :$S_1 < S_2 < S_3$

10
$T_4$~63
2
62
$T_3$
61
$T_2$
3
1
$T_1$~60
33
5
32

FIG. 10

# FIG. 11A

RELATIVE HUMIDITY: 60%
RELATIVE OUTPUT VALUE (%)
123
100
0
5
30
INTAKE AIR TEMPERATURE (°C)

# FIG. 11B

OUTPUT INCREASE RATE (%)
30
25
23
20
15
10
5
0
MAX. GT OUTPUT
START OF DROPLET
INCORPORATION
INTO COMP
0.35
2.3
37.0
36.7
36.5
36.0
35.7
35.5
35.0
THERMAL EFFICIENCY (%)
0.0
0.5
1.0
1.5
2.0
2.5
3.0
AMOUNT OF ATOMIZATION
/AMOUNT OF INTAKE AIR (%)

FIG. 12

WITHOUT ATOMIZING: COMP. OUTLET TEMP 346.8°C
ACTUAL
CALCULATED (WITH NO CHANGE IN COMP. OUTLET ENTHALPY) (23.4°C,71.15%R. H.)
DROPLET INTRODUCTION POINT (20.3°C, 95%R. H.)
DECREMENT IN COMP. OUTLET TEMP (K)
ATOMIZATION PERCENTAGE (%)
0
5
10
15
20
25
30
0.0
0.2
0.4
0.6
0.8
1.0

FIG. 13

200
26
27
8
20
28
29
3
23
25
7
9
30
6
2b
1
4a
21
22
24
5
11a
11b
2a
31
32
10
300
100

# FIG. 14

200
26
A
27
20
22
29
24
3
6
1
2
4
B
5
100
31
32
300

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008039367 A
- JP 2001214757 A
- US 6688108 B1
- JP 6010702 A